# EUROPÄISCHE PATENTSCHRIFT

(11) **EP 0 492 082 B1**
(45) Veröffentlichungstag und Bekanntmachung des Hinweises auf die Patenterteilung: **02.03.1994**
(21) Anmeldenummer: 91118218.6
(22) Anmeldetag: 25.10.1991
(51) Int. Cl.: A01D 45/02

(54) **Erntegerät zum Ernten von Mais oder anderen Körnerfrüchten**
Device for harvesting corn or other grain
Dispositif pour la récolte du mais ou d'autres grains

(30) Priorität: 22.12.1990 DE 4041530
(43) Veröffentlichungstag der Anmeldung: 01.07.1992
(73) Patentinhaber: CLAAS OHG, D-33426 Harsewinkel (DE)
(72) Erfinder: Sanders, Lambert, W-4836 Herzebrock-Clarholz (DE); Ostrup, Heinrich, W-4834 Harsewinkel (DE); Dudler, Heribert, W-4834 Harsewinkel (DE)
(74) Vertreter: Hanewinkel, Lorenz, Dipl.-Phys.

(56) Entgegenhaltungen:
- DE-A- 1 918 931
- DE-A- 3 433 444
- DE-A- 3 930 777
- FR-A- 1 475 168
- US-A- 1 641 436
- US-A- 2 288 915
- US-A- 3 304 703

## Beschreibung

Die Erfindung bezieht sich auf ein Erntegerät zum Ernten von Mais oder anderen Körnerfrüchten, welches als Vorsatzgerät für einen Mähdrescher ausgebildet und mit einer Einzugsvorrichtung und einem Pflückspalt je Pflanzenreihe zur Trennung der Kolben von der Pflanze ausgestattet ist und je Pflanzenreihe eine angetriebene Pflückwalze mit Schlagplatten sowie einen dieser Pflückwalze zugeordneten, die Pflückwalze teilummantelnden, aus einem wannenförmigen Leitblech oder aus einer achsparallel zur Pflückwalze verlaufenden, angetriebenen Gegenwalze gebildeten Gegenhalter aufweist.

Ein derartiges Erntegerät ist zum Beispiel aus der DE-A 39 30 777 und der DE-A 34 33 444 bekannt geworden.

Dabei ist die Pflückwalze und der Gegenhalter jeweils an einem eigenen Träger gelagert und diese Träger stehen lediglich mit einem Längenende mit dem Maispflückergestell bzw. dem Getriebekasten in Verbindung, so daß beide Träger mit Pflückwalze und Gegenhalter nur einendig aufgehängt gelagert sind und ihr anderes Ende zur Bildung des Pflanzeneinlaufes freiliegt.

Da beim Pflanzeneinlauf bzw. beim Einlauf von Fremdkörpern auf die beiden Träger eine gewisse Querkraft ausgeübt wird, müssen diese in sich verhältnismäßig stabil und schwer ausgeführt und an ihren Enden befestigt sein. Die Hauptbelastungszone liegt somit im vorderen Einlaufbereich der Träger und es ist ein Aufweiten des Pflückspaltes, und somit eine Querbewegung der Träger nicht auszuschließen, was zu Störungen im Arbeitsablauf und zu Beschädigungen in den Lager- und Befestigungsstellen führt.

Aufgabe der Erfindung ist es, ein nach der eingangs genannten Art aufgebautes Erntegerät mit einer einfach und kostensparend aufgebauten und leicht zu montierenden Abstandssicherung der Träger und somit der Pflückwalze und des Gegenhalters zueinander auszustatten, die im Pflanzeneinlaufbereich ein übermäßiges Aufweiten verhindert, einen leichteren Aufbau der Träger ermöglicht und Beschädigungen in den Lager- und Befestigungsstellen ausschließt und gleichzeitig für den Trennvorgang der Maispflanzen genutzt werden kann.

Diese Aufgabe wird erfindungsgemäß durch die kennzeichnenden Merkmale des Patentanspruches 1 gelöst, wobei noch die in den einzelnen Unteransprüchen aufgeführten Gestaltungsmerkmale vorteilhafte und förderliche Weiterbildungen der Aufgabenlösung darstellen.

Der Gegenstand der Erfindung erstreckt sich nicht nur auf die Merkmale der einzelnen Ansprüche, sondern auch auf deren Kombination.

Das Erntegerät ist erfindungsgemäß zwischen seinen beiden Trägern und somit der Pflückwalze und dem Gegenhalter im Pflanzeneinlaufbereich mit einer Querverbindung (Querstabilisierung) ausgestattet, die ein übermäßiges Aufweiten des Pflückspaltes und somit Verformen der beiden Träger nach außen durch die Maispflanzen oder durch Fremdkörper vermeidet und dadurch Beschädigungen und Zerstörungen in den Lager- und Befestigungsstellen von Trägern, Pflückwalze und Gegenhalter ausschließt.

Diese Querverbindung gestattet einen leichteren Aufbau der Querträger bei erhöhter Stabilität derselben aufgrund der beidendigen Verbindungen, so daß das Widerstandsmoment der Träger reduziert und die Verformung der Träger bei Fremdkörpereinwirkung stark vermindert wird.

Es ist bevorzugt, diese Querverbindung von einem plattenförmigen Verbindungsteil zu bilden, welches mit einem Ende starr an einem Träger und mit dem anderen Ende federbelastet an dem anderen Träger gehalten ist, so daß durch diese Federbelastung in einem begrenzten Bereich ein Aufweiten der Träger gestattet wird. Dabei ist es vorteilhaft, im federbelasteten Bereich einen elektrischen Schalter anzuordnen, der bei extremer Aufweitung der Träger durch Fremdkörpereinwirkung der Bedienungsperson ein optisches oder akustisches Signal zur Behebung des Mangel angibt oder aber der die entsprechenden Antriebe des Erntegerätes ausschaltet.

In vorteilhafter Weise ist diese Querverbindung gleichzeitig als Abtrenn- oder Zerkleinerungsmesser ausgeführt, mit dem der Maisstengel im Einlaufbereich möglichst bodennah abgetrennt oder aber zerkleinert wird.

Dieses Querverbindungselement mit Messerkante ist sowohl bei Ein- und auch bei Zweiwalzensystemen einsetzbar sowie auch bei einem Maispflücker mit einer Pflückwalze und einem wangenartigen Leitblech anzuordnen. Dabei läßt sich dieses Querverbindungselement in die Einschnitte von Pflückwalze und Gegenwalze einsetzen und auch an die Walzenspitzen mit den Schneckengängen anordnen, wobei in beiden Fällen die gleiche Querstabilität und Schneidwirkung erzielt wird.

Das Querverbindungselement ist somit an der gewünschten Stelle leicht einrichtbar anzubringen und kann auch bei im Betrieb befindlichen Erntegeräten nachgerüstet werden.

Dieses Querverbindungselement ist aus einer beliebig dicken Blechplatte mit angeschliffener, angeformter Schneidkante oder aber mit auswechselbarer Schneidklinge ausführbar.

Auf den Zeichnungen ist ein Ausführungsbeispiel gemäß der Erfindung dargestellt, welches nachfolgend näher erläutert wird. Es zeigt:

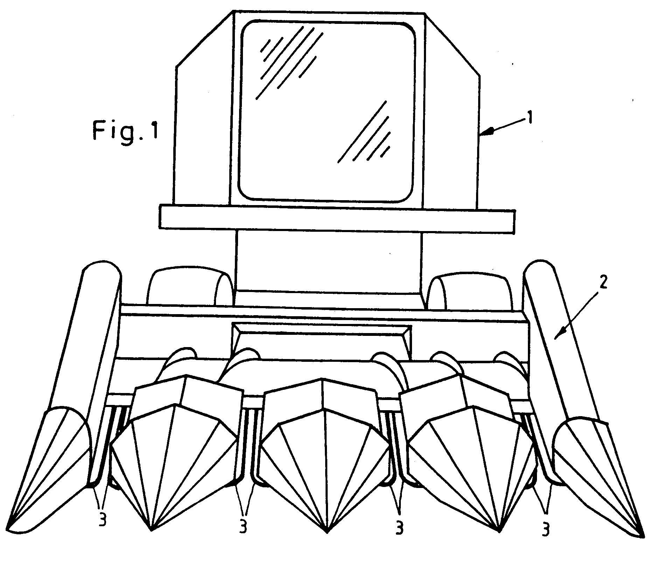

- Fig. 1: eine Vorderansicht eines Erntegerätes mit Maispflücker,
- Fig. 2: eine Draufsicht auf den Maispflücker mit einer Pflückwalze und zugeordneter Gegenwalze und im Pflanzen-Einlauf in zwei Anordnungsmöglichkeiten dargestellten Verbindungsteil als Schneidmesser und Abstandshalter,
- Fig. 3: einen Querschnitt durch die Pflückwalze und Gegenwalze gemäß Schnittlinie III-III in Fig. 2 mit zwischen den Walzen-Trägern angeordnetem Verbindungsteil, welches in Einschnitte der Pflückwalze und der Gegenwalze eingreift,
- Fig. 4: einen Querschnitt durch die Pflückwalze und Gegenwalze gemäß Schnittlinie IV-IV in Fig. 2 mit im Bereich der Einlaufschnecken beider Walzen angeordnetem Verbindungsteil,
- Fig. 5: einen Längsschnitt durch den einlaufseitigen Schneckenbereich einer Walze mit Verbindungsteil und angeformter Messerhaube gemäß Schnittlinie V-V in Fig. 4,
- Fig. 6: eine Vorderansicht einer Pflückwalze und eines damit zusammenwirkenden Leitbleches mit zugeordnetem Verbindungsteil.

Mit (1) ist ein Mähdrescher mit frontseitigem Maispflücker (2) bezeichnet. Dieser Maispflücker (2) weist vier Reihen von Förderkettenpaaren (3) auf, die die nicht dargestellten Maisstengel einziehen. Unterhalb eines jeden Förderkettenpaares (3) sind achsparallel zueinander eine Pflückwalze (4) und ein von einer Gegenwalze (5) oder einem die Pflückwalze (4) teilummantelnden, wannenförmigen Leitblech (6) gebildeter Gegenhalter gelagert.

Die Pflückwalze (4) und die Gegenwalze (5) sind jeweils an einem Träger (7) gelagert, die mit ihrem in Pflanzen-Einlaufrichtung "A" hinteren Längenende an einem gemeinsamen Getriebekasten (8) festgelegt sind und mit ihrem Längenende zum Pflanzeneinlauf freiliegen.

Die beiden Walzen (4, 5) werden vom Getriebekasten (8) aus gegenläufig angetrieben.

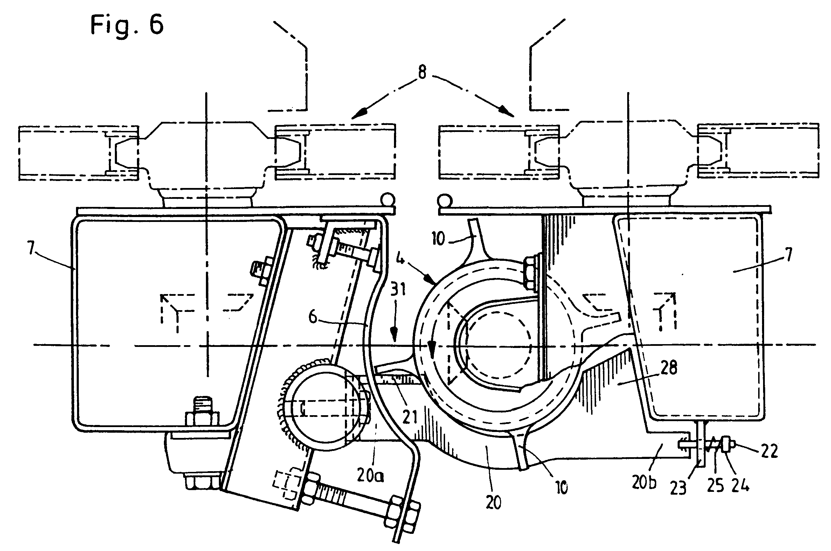

Bei der Ausführung des Maispflückers (2) mit Pflückwalze (4) und Leitbleche (6) ist die Pflückwalze (4) ebenfalls an einem Träger (7) antreibbar gelagert und das Leitblech (6) am zweiten Träger (7) befestigt (Fig. 6).

In an sich bekannter Weise besteht die Pflückwalze (4) aus einem zylindrischen Grundkörper (9), auf den am Umfang gleichmäßig verteilt Schlagplatten (10) aufgesetzt sind. Diese sind mit Einschnitten (11) versehen, in die die Messer (12) einer Messerschar eingreifen. Die Gegenwalze (5) ist oberhalb der Messerschar (12) angeordnet. Auch sie besteht aus einem zylindrischen Grundkörper (13), auf den mit Zwischenräumen (14) zueinander in Achsrichtung mindestens dreiflügelige, vorzugsweise sechsflügelige, Segmente (15) aufgesetzt sind. Die Flügel (15a) dieser Segmente (15) verlaufen bogenförmig und sind entgegen der durch den Pfeil "B" gekennzeichneten Drehrichtung nach hinten geneigt, wodurch die Pflanzenstengel in Richtung der Pflückwalze (4) gedrückt werden.

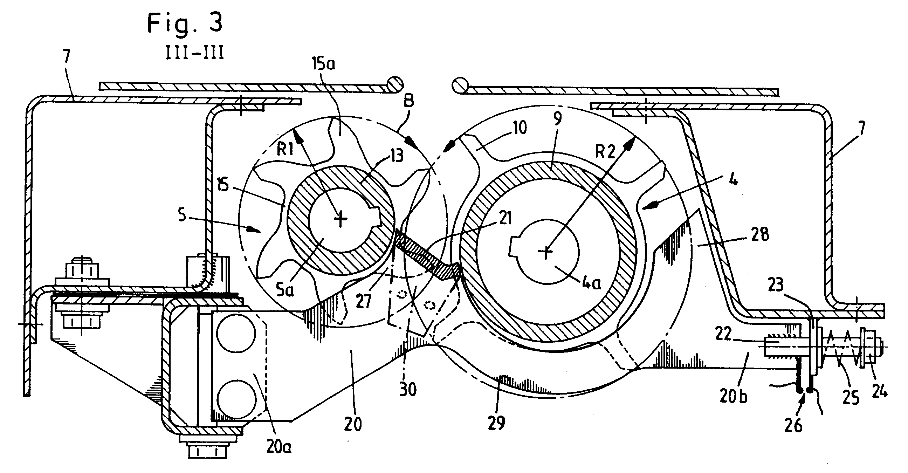

Wie die Fig. 3 erkennen läßt, ist der Abstand der Walzenachsen (4a) und (5a) zueinander kleiner als die Addition der Hüllradien R1 und R2, so daß unter allen Umständen durch ständigen Formschluß zwischen den Walzen (4, 5) und dem Erntegut ein sicherer Durchzug der Stengel erfolgt.

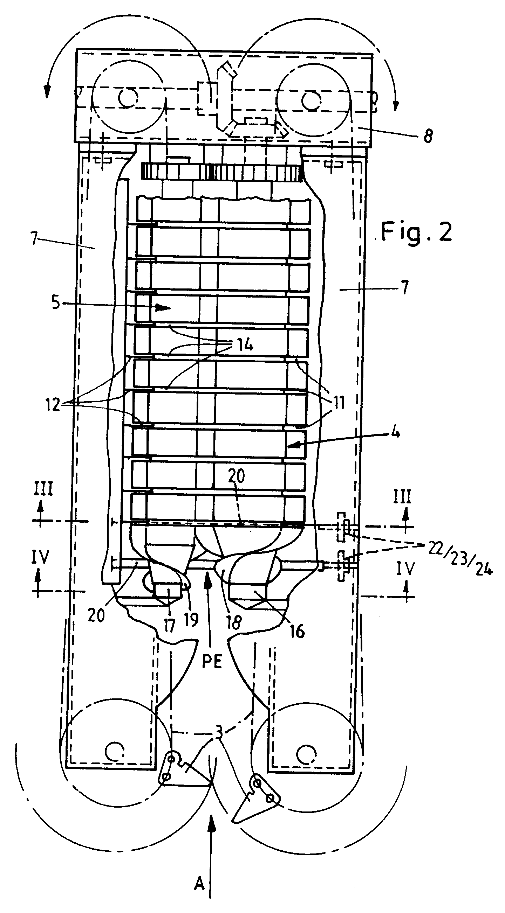

Die Fig. 2 und auch 4 und 5 zeigt, daß beide Walzen (4) und (5) vorne eine konische Spitze (16) bzw. (17) aufweisen, die mit Schneckenblechen (18) und (19) (einem Schneckengang) besetzt sind, wodurch der Einzug bzw. die Stengelannahme verbessert wird.

Im Pflanzen-Einlauf (PE) zwischen Pflückwalze (4) und Gegenhalter (5, 6) ist ein als Trennmesser wirkendes und den Abstand zwischen Pflückwalze (4) und Gegenhalter (5, 6) stabilisierendes Verbindungsteil (20) angeordnet.

Dieses Verbindungsteil (20) verläuft quer, vorzugsweise rechtwinklig zur Pflanzen-Einlaufrichtung "A" und somit zur Längsachse der Pflückwalze (4) und ist von einer mindestens nahezu senkrecht zur Pflückwalzen-Längsachse stehenden Blechplatte mit oberer Messerkante (21) gebildet.

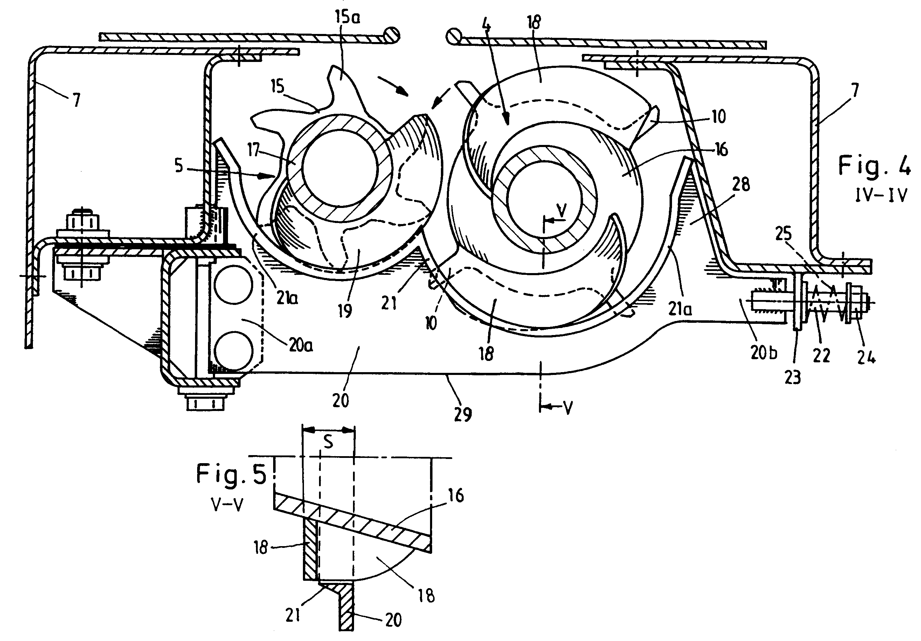

Gemäß der Ausführung nach Fig. 2 und 4 ist das Verbindungsteil (20) dem im Pflanzen-Einlauf (PE) an der Pflückwalze (4) und Gegenwalze (5) angebrachten Schneckengang (18, 19) zugeordnet.

Gemäß Fig. 2 und 3 ist das Verbindungsteil (20) hinter dem im Pflanzen-Einlauf (PE) an der Pflückwalze (4) und Gegenwalze (5) angebrachten Schneckengang (18, 19) angeordnet und greift in einen Einschnitt (11) der Pflückwalze (4) und einen Zwischenraum (14) der Gegenwalze (5) ein.

Das Verbindungsteil (20) ist mit einem Längenende (20a) starr, aber lösbar und mit dem anderen Längenende (20b) federbelastet an den beiden die Pflückwalze (4) und den Gegenhalter (5, 6) lagernden Trägern (7) festgelegt.

Dabei ist es bevorzugt, das Verbindungsteil (20) mit seinem Längenende (20a) starr an dem die Gegenwalze (5) oder das Leitblech (6) lagernden Träger (7) und mit seinem anderen Längenende (20b) an dem die Pflückwalze (4) lagernden Träger (7) in einen gewissen Längenverschiebebereich bei Abstandsänderung zwischen beiden Trägern (7) zu befestigen.

Das beweglich gelagerte Längenende (20b) des Verbindungsteiles (20) weist einen daran befestigten Bolzen (22) auf, welcher eine am Träger (7) angebrachte Lasche (23) durchgreift; um diesen Bolzen (22) ist eine sich an der Lasche (23) und einer auf dem Bolzen (22) aufgeschraubten Mutter (24) abstützende Druckfeder (25) angeordnet, die den Toleranzausgleich bei Abstandsänderung zwischen Pflückwalze (4) und Gegenhalter (5, 6) zuläßt.

Es ist weiterhin bevorzugt, zwischen Lasche (23) und Verbindungsteil-Längenende (20b) ein bei extremer Abstandsänderung von Pflückwalze (4) und Gegenhalter (5, 6) sowie über den Toleranzbereich hinausgehender Verschiebung des Verbindungsteiles (20) durch Fremdkörpereinwirkung, wie Steine, Äste, od. dgl., den Antrieb der Pflückwalze (4) und Gegenwalze (5) und/oder den Antrieb des Mähdreschers ausschaltender elektrischer Schalter (26), wie Näherungsschalter, Hebelschalter, Dehnungsschalter, od. dgl., anzuordnen. Dieser Schalter (26) kann auch der Bedienungsperson im Mähdrescher ein akustisches oder optisches Signal über die extreme Abstandsänderung geben, so daß die Bedienungsperson die entsprechenden Antriebe abschaltet.

Das plattenförmige Verbindungsteil (20) umgreift die Pflückwalze (4) auf einem Teilbereich ihres Umfanges und besitzt dabei zwischen Pflückwalze (4) und Gegenwalze (5) ein hochgezogenes Plattenteil (27) mit Messerkante (21) und zwischen Pflückwalze (4) und Träger (7) ein hochgezogenes Plattenteil (28) als Klemmschutz für Häckselteile, so daß sich zwischen Pflückwalze (4) und Träger (7) kein Maisstroh verklemmen kann.

Die Unterkante (29) des Verbindungsteiles (20) liegt im Bereich der Pflückwalze (4) innerhalb deren Hüllradiusses (R2) und das Verbindungsteil (20) ist im Bereich des Gegenhalters (5, 6) nach unten heruntergezogen (Fig. 3).

Das Verbindungsteil (20) läßt sich am hochgezogenen Plattenteil (27) zwischen Pflückwalze (5) und Gegenhalter (5, 6) mit einer auswechselbaren Schneidklinge (30) als Messerkante ausstatten (vgl. strich-punktierte Darstellung in Fig. 3).

In der Fig. 3 ist das in den Einschnitt (11) und den Zwischenraum (14) beider Walzen (4, 5) eingreifende Verbindungsteil (20) gezeigt, welches zwischen beiden Walzen (4, 5) am hochgezogenen Plattenteil (27) die angeformte oder von einer auswechselbaren Schneidklinge (29) gebildete Messerkante (21) hat. Auch läßt sich aus dieser Fig. 3 der hochgezogene Plattenteil (28) zwischen Pflückwalze (4) und Träger (7) zum Klemmschutz erkennen und es ist das andere heruntergezogene Längenende (20) ersichtlich, welches unterhalb der Gegenwalze (5) am Träger (7) starr befestigt ist.

Fig. 4 zeigt die Anordnung des Verbindungsteiles (20) unter den Schneckengängen (18, 19) der beiden Walzen (4, 5), wobei das Verbindungsteil (20) auf seiner gesamten obenliegenden Länge zwischen beiden Trägern (7) eine entgegen dem Pflanzen-Einlauf (PE) herausgeformte Kante (21a) zeigt, wobei diese Kante (21a) beide Walzen (4, 5) bogenförmig auf einem Teilumfang umschließt, und zwischen den Walzen (4, 5) im Bereich der Pflückwalze (4) die Messerkante bildet, die mit dem Schneckengang (18) - im Bereich "S" - einen Schneidvorgang (Häckselung der Pflanzenstengel) durchführt.

Auch an diesem plattenförmigen Verbindungsteil (20) ist am Ende (20b) der hochgezogene Klemmschutz (28) vorgesehen und die Platten-Unterkante (29) verläuft mit Abstand unterhalb der Pflückwalze (4) und Gegenwalze (5) in waagerechter Richtung von der Pflückwalze (4) zum Längenende (20a).

An dem Schneckengang (18) läßt sich im Schneidbereich "S" ein Schneidmesser oder eine Verschleißleiste auswechselbar befestigen, so daß der Schneckengang (18) durch die auswechselbaren Teile einen dauerhaft haltbaren Einsatz zuläßt.

In Fig. 5 ist die Zuordnung des Verbindungsteiles (20) zum Schneckengang (18) der Pflückwalzen-Spitze (Kegel) (16) deutlich zu ersehen und die Messerkante (21) des Verbindungsteiles (20) wirkt im Schneidbereich "S" mit dem Schneckengang (18) zusammen, wobei der Schneckengang (18) im Schneidbereich "S" derart geformt ist, daß er gleichförmig an der Messerkante (21) vorbei im gesamten Drehbereich am Verbindungsteil (20) sich drehen kann.

Fig. 6 zeigt eine an einem Träger (7) gelagerte Pflückwalze (4) und ein am anderen Träger befestigtes Leitblech (6) als Gegenhalter. Hierbei ist das Verbindungsteil (20) am das Leitblech (6) haltenden Träger (7) mit seinem Ende (20a) starr befestigt und mit seinem anderen Ende (20b) am pflückwalzenseitigen Träger (7) federbelastet gelagert.

Das Verbindungsteil (20) greift in den Einschnitt (11) der Pflückwalze (4) ein und umgreift diese teilkreisförmig vom hochgezogenen Klemmschutz (28) bis zur Messerkante (21), die zwischen Leitblech (6) und Pflückwalze (4) im Spalt (31) - Schneidkanal (31) - etwa horizontal verläuft und von einer angeschliffenen, angeformten Schneidkante oder einer auswechselbaren Schneidklinge (30) gebildet ist.

## Patentansprüche

1. Erntegerät zum Ernten von Mais oder anderen Körnerfrüchten, welches als Vorsatzgerät für einen Mähdrescher ausgebildet und mit einer Einzugsvorrichtung und einem Pflückspalt zur Trennung der Kolben von der Pflanze (Stengel) ausgestattet ist und je Pflanzenreihe eine angetriebene Pflückwalze (4) mit Schlagplatten (10) sowie einen dieser Pflückwalze (4) zugeordneten, die Pflückwalze teilummantelnden, aus einem wannenförmigen Leitblech (6) oder aus einer achsparallel zur Pflückwalze verlaufenden, angetriebenen Gegenwalze (5) gebildeten Gegenhalter (5,6) aufweist, dadurch gekennzeichnet, daß im Pflanzen-Einlauf (PE) zwischen Pflückwalze (4) und Gegenhalter (5, 6) ein als Abtrenn- und Zerkleinerungsmesser wirkendes und den Abstand zwischen Pflückwalze (4) und Gegenhalter (5, 6) stabilisierendes Verbindungsteil (20) angeordnet ist.

2. Erntegerät nach Anspruch 1, dadurch gekennzeichnet, daß das Verbindungsteil (20) quer, vorzugsweise rechtwinklig zur Pflanzen-Einlaufrichtung (A) und somit zur Längsachse der Pflückwalze (4) verläuft und von einer mindestens nahezu senkrecht zur Pflückwalzen-Längsachse stehenden Blechplatte mit oberer Messerkante (21) gebildet ist.

3. Erntegerät nach Anspruch 1 und 2, dadurch gekennzeichnet, daß das Verbindungsteil (20) dem im Pflanzen-Einlauf (PE) an der Pflückwalze (4) und Gegenwalze (5) angebrachten Schneckengang (18, 19) zugeordnet ist (Fig. 2 und 4).

4. Erntegerät nach Anspruch 1 und 2, dadurch gekennzeichnet, daß das Verbindungsteil (20) hinter dem im Pflanzen-Einlauf (PE) an der Pflückwalze (4) und Gegenwalze (5) angebrachten Schneckengang (18, 19) angeordnet ist und in einem Einschnitt (11) der Pflückwalze (4) und einen Zwischenraum (14) der Gegenwalze (5) eingreift (Fig. 2 und 3).

5. Erntegerät nach einem der Ansprüche 1 bis 4, dadurch gekennzeichnet, daß das Verbindungsteil (20) mit einem Längenende (20a) starr, aber lösbar und mit dem anderen Längenende federbelastet an den beiden die Pflückwalze (4) und den Gegenhalter (5, 6) lagernden Trägern (7) festgelegt ist.

6. Erntegerät nach Anspruch 5, dadurch gekennzeichnet, daß das Verbindungsteil (20) mit einem Längenende (20a) starr an dem die Gegenwalze (5) oder das Leitblech (6) lagernden Träger (7) und mit dem anderen Längenende (20b) an dem die Pflückwalze (4) lagernden Träger (7) in einen gewissen Längenverschiebebereich bei Abstandsänderung zwischen beiden Trägern (7) befestigt ist.

7. Erntegerät nach Anspruch 5 und 6, dadurch gekennzeichnet, daß das beweglich gelagerte Längenende (20b) des Verbindungsteiles (20) mit einem daran befestigten Bolzen (22) eine am Träger (7) angebrachte Lasche (23) durchgreift und um diesen Bolzen (22) eine sich an der Lasche (23) und einer auf dem Bolzen (22) aufgeschraubten Mutter (24) abstützende Druckfeder (25) angeordnet ist.

8. Erntegerät nach einem der Ansprüche 5 bis 7, dadurch gekennzeichnet, daß das zwischen Lasche (23) und Verbindungsteil-Längenende (20b) ein bei extremer Abstandsänderung von Pflückwalze (4) und Gegenhalter (5, 6) sowie über den Toleranzbereich hinausgehender Verschiebung des Verbindungsteiles (20) den Antrieb der Pflückwalze (4) und Gegenwalze (5) und/oder den Antrieb des Mähdreschers ausschaltender elektrischer Schalter (26), wie Näherungsschalter, angeordnet ist.

9. Erntegerät nach einem der Ansprüche 1 bis 8, dadurch gekennzeichnet, daß das plattenförmige Verbindungsteil (20) die Pflückwalze (4) auf einem Teilbereich ihres Umfanges umgreift und dabei zwischen Pflückwalze (4) und Gegenwalze (5) ein hochgezogenes Plattenteil (27) mit Messerkante (21) und zwischen Pflückwalze (4) und Träger (7) ein hochgezogenes Plattenteil (28) als Klemmschutz für Häckselteile aufweist und die Unterkante (29) des Verbindungsteiles (20) im Bereich der Pflückwalze (4) innerhalb deren Hüllradiusses (R2) liegt und das Verbindungsteil (20) im Bereich der Gegenwalze (5) nach unten heruntergezogen ist (Fig. 3).

10. Erntegerät nach einem der Ansprüche 1 bis 9, dadurch gekennzeichnet, daß das Verbindungsteil (20) am hochgezogenen Plattenteil (27) zwischen Pflückwalze (4) und Gegenhalter (5, 6) eine auswechselbare Schneidklinge (30) als Messerkante hat.

11. Erntegerät nach einem der Ansprüche 1 bis 10, dadurch gekennzeichnet, daß das Verbindungsteil (20) unter den Schneckengängen (18, 19) der beiden Walzen (4, 5) liegt, auf seiner gesamten obenliegenden Länge zwischen beiden Trägern (7) eine entgegen dem Pflanzen-Einlauf (PE) herausgeformte, beide Walzen (4, 5) bogenförmig auf einem Teilumfang umschließende Kante (21a) aufweist, die im hochgezogenen Plattenteil (27) zwischen den Walzen (4, 5) im Bereich der Pflückwalze (4) mit deren Schneckengang (18) im Bereich "S" die Messerkante (21) bildet (Fig. 4).

12. Erntegerät nach Anspruch 11, dadurch gekennzeichnet, daß das Verbindungsteil (20) am Ende (20b) das hochgezogene Plattenteil (28) als Klemmschutz aufweist und seine Platten-Unterkante (29) mit Anstand unterhalb der Pflückwalze (4) und Gegenwalze (5) in waagerechter Richtung von der Pflückwalze (4) bis zum Längenende (20a) verläuft (Fig. 4).

13. Erntegerät nach einem der Ansprüche 1 bis 12, dadurch gekennzeichnet, daß das der an einem Träger (7) gelagerten Pflückwalze (4) und dem am anderen Träger (7) befestigtes Leitblech (6) zugeordnete Verbindungsteil (20) am das Leitblech (6) haltenden Träger (7) mit seinem Ende (20a) starr befestigt und mit seinem anderen Ende (20b) am pflückwalzenseitigen Träger (7) federbelastet gelagert ist, in den Einschnitt (11) der Pflückwalze (4) eingreift und diese teilkreisförmig vom hochgezogenen Klemmschutz (28) bis zur Messerkante (21) umfaßt, die zwischen Leitblech (6) und Pflückwalze (4) im Spalt (31) etwa waagerecht verlaufend liegt (Fig. 6).

## Claims

1. Harvesting device for harvesting maize or other cereals, which is in the form of an attachment for a combine harvester and is equipped with a front-feed device and a picking gap for separating the cobs from the plant (stem), and for each row of plants incorporates a driven picking roll (4) with beating plates (10) and, associated with said picking roll (4) and partially enveloping the picking roll, a back-up unit (5, 6) constituted by a trough-shaped baffle plate (6) or by a driven back-up roll (5) whose axis is parallel to the axis of the picking roll,
characterised in that a connecting part (20) which acts as a severing and chopping knife and stabilises the distance between the picking roll (4) and the back-up unit (5, 6) is disposed in the plant intake zone (PE) between the picking roll (4) and back-up unit (5, 6).

2. Harvesting device according to claim 1, characterised in that the connecting part (20) extends at an angle, preferably at a right angle, to the plant intake direction (A) and thus to the longitudinal axis of the picking roll (4) and is constituted by a sheet metal plate, with an upper knife edge (21), which is at least more or less perpendicular to the longitudinal axis of the picking roll.

3. Harvesting device according to claims 1 and 2, characterised in that the connnecting part (20) is associated with the worm thread (18, 19) mounted in the plant intake zone (PE) on the picking roll (4) and back-up roll (5) (Figs. 2 and 4).

4. Harvesting device according to Claims 1 and 2, characterised in that the connecting part (20) is disposed behind the worm thread (18, 19) mounted in the plant intake zone (PE) on the picking roll (4) and back-up roll (5) and engages in a recess (11) in the picking roll (4) and a space (14) in the back-up roll (5) (Figs. 2 and 3).

5. Harvesting device according to any of claims 1 to 4, characterised in that the connecting part (20) is located, rigidly but removably at one longitudinal end (20a), and spring-loaded at the other longitudinal end, on the two brackets (7) supporting the picking roll (4) and the backup unit (5, 6).

6. Harvesting device according to claim 5, characterised in that the connecting part (20) is fixed rigidly by one longitudinal end (20a) to the bracket (7) supporting the back-up roll (5) or the baffle plate (6) and by the other longitudinal end (20b) to the bracket (7) supporting the picking roll (4), in a given longitudinal displacement range as the spacing between the two brackets (7) is altered.

7. Harvesting device according to claims 5 and 6, characterised in that the movably mounted longitudinal end (20b) of the connecting part (20) has fixed to it a pin (22) which passes through a fishplate (23) mounted on the bracket (7), and disposed around said pin (22) is a compression spring (25) which rests on the fishplate (23) and on a nut (24) screwed onto the pin (22).

8. Harvesting device according to any of claims 5 to 7, characterised in that between the fishplate (23) and the longitudinal end (20b) of the connecting part is disposed an electric switch (26), for instance a proximity switch, which disconnects the drive of the picking roll (4) and back-up roll (5) and/or the drive of the combine harvester in the event of an extreme change in the spacing between the picking roll (4) and the back-up unit (5, 6) and also in the event that the connecting part (20) is displaced by an amount exceeding the tolerance range.

9. Harvesting device according to any of claims 1 to 8, characterised in that the plate-shaped connecting part (20) clasps the picking roll (4) over a sub-section of the circumference of the latter and between the picking roll (4) and the back-up roll (5) incorporates a raised plate section (27) with a knife edge (21) and between the picking roll (4) and the bracket (7) a raised plate section (28) as an anti-jamming device for chaff, and the lower edge (29) of the connecting part (20) is situated in the range of the picking roll (4) within the enveloping radius (R2) thereof and the connecting part (20) is lowered down in the vicinity of the back-up roll (5) (Fig. 3).

10. Harvesting device according to any of claims 1 to 9, characterised in that on the raised plate section (27) between the picking roll (4) and the back-up unit (5, 6) the connecting part (20) has an interchangeable cutting blade (30) as the knife edge.

11. Harvesting device according to any of claims 1 to 10, characterised in that the connecting part (20) is situated below the worm threads (18, 19) of the two rolls (4, 5), along its entire upper length between the two brackets (7) incorporates an edge (21a) formed opposite the plant intake zone (PE) and enclosing both rolls (4, 5) in an arc over part of their circumference, said edge (21a) forming the knife edge (21) in the raised plate section (27) between the rolls (4, 5) in the region of the picking roll (4) with the worm thread (18) thereof in the "S" region.

12. Harvesting device according to claim 11, characterised in that at the end (20b) the connecting part (20) incorporates the raised plate section (28) as an anti-jamming device and the lower plate edge (29) thereof extends horizontally at a distance below the picking roll (4) and back-up roll (5) from the picking roll (4) as far as the longitudinal end (20a) (Fig. 4).

13. Harvesting device according to any of claims 1 to 12, characterised in that the connecting part (20) associated with the picking roll (4) mounted on one bracket (7) and with the baffle plate (6) fixed on the other bracket (7) is rigidly fixed by its end (20a) to the bracket (7) holding the baffle plate (6) and by its other end (20b) is mounted spring-loaded on the bracket (7) nearest the picking roll, engages in the recess (11) in the picking roll (4) and grips the latter in a partial circle from the raised anti-jamming device (28) as far as the knife edge (21), which is set more or less horizontally between the baffle plate (6) and the picking roll (4) in the gap (31) (Fig. 6).

## Revendications

1. Dispositif pour la récolte du maïs ou d'autres céréales, lequel est conçu comme appareil adaptable à une moissonneuse-batteuse et est pourvu d'un dispositif d'amenée et d'une fente de cueillette pour séparer les épis des plantes (des tiges), ce dispositif de récolte présentant, en outre, pour chaque rang de plantes, un rouleau de récolte entraîné (4), pourvu de battes (10), ainsi qu'un contre-support (5; 6), coordonné à ce rouleau de récolte (4), qu'il revêt partiellement, et formé d'une tôle de guidage (6) ou consistant en un contre-rouleau entraîné (5), axialement parallèle au rouleau de récolte,
caractérisé par le fait
que, dans l'entrée des plantes (PE), entre le rouleau de récolte (4) et le contre-support (5, 6), une pièce de raccordement (20) est prévue, laquelle agit en tant que dispositif de coupage et de fragmentation et stabilise l'intervalle entre le rouleau de récolte (4) et les contre-supports (5, 6).

2. Dispositif de récolte selon la revendication 1,
caractérisé par le fait
que la pièce de raccordement (20) s'étend transversalement - de préférence à angle droit - par rapport au sens d'arrivée des plantes (A) et donc par rapport à l'axe longitudinal du rouleau de récolte (4), et est formée par une plaque de tôle, qui est - tout au moins presque - perpendiculaire à l'axe longitudinal du rouleau de récolte et présente une arête supérieure coupante (21).

3. Dispositif de récolte selon les revendications 1 et 2,
caractérisé par le fait
que la pièce de raccordement (20) est coordonnée à l'hélice (18, 19), disposée dans le dispositif d'entrée des plantes (PE) sur le rouleau de récolte (4) et le contre-rouleau (5) (cf. fig. 2 et 4).

4. Dispositif de récolte selon les revendications 1 et 2,
caractérisé par le fait
que la pièce de racccordement (20) est disposée en aval de l'hélice (18; 19), qui est montée dans l'entrée des plantes (PE), sur le rouleau de récolte (4) et le contre-rouleau (5), et qu'elle s'engage dans une entaille (11) du rouleau de récolte (4) et dans un intervalle (14) du contre-rouleau (cf. fig. 2 et 3).

5. Dispositif de récolte selon les revendications 1 à 4,
caractérisé par le fait
que la pièce de raccordement (20) est fixée aux deux supports (7) du rouleau de récolte (4) et du contre-support (5; 6), rigidement, mais de façon amovible, par l'une de ses extrémités longitudinales (20a) et, chargée par ressort, par son autre extrémité longitudinale.

6. Dispositif de récolte selon la revendication 5,
caractérisé par le fait
que la pièce de raccordement (20) est fixée, rigidement, par l'une de ses extrémités longitudinales (20a) au support (7) du contre-rouleau (5) ou de la tôle de guidage (6) et reliée, par l'autre extrémité longitudinale (20b) au support (7) du rouleau de récolte (4), étant déplaçable sur une certaine distance en cas de modification de l'intervalle entre les deux supports (7).

7. Dispositif de récolte selon les revendications 5 et 6,
caractérisé par le fait
que l'extrémité longitudinale (20b) de la pièce de raccordement (20), reliée mobilement, est pourvue d'un boulon (22), qui s'engage dans une éclisse (23), équipant un support (7), et qu'un ressort de pression (25) est disposé autour du boulon (22), lequel ressort de pression (25) prend appui sur l'éclisse (23) et sur un écrou (24), vissé sur le boulon (22).

8. Dispositif de récolte selon les revendications 5 à 7,
caractérisé par le fait
qu'un commutateur électrique (26), genre détecteur de proximité, est installé entre l'éclisse (23) et l'extrémité longitudinale (20b) de la pièce de raccordement, lequel met hors de circuit l'entraînement du rouleau de récolte (4) et du contre-rouleau (5) et/ou l'entraînement de la moissonneuse-batteuse en cas de modification extrême de l'intervalle du rouleau de récolte (4) et du contre-support (5, 6), ainsi qu'en cas de décalage de la pièce de raccordement (20) au-delà du domaine de tolérance.

9. Dispositif de récolte selon les revendications 1 à 8,
caractérisé par le fait
que la pièce de raccordement (20), genre plateforme, embrasse le rouleau de récolte (4) sur une partie de son pourtour et présente, entre rouleau de récolte (4) et contre-rouleau (5), une partie remontée (27) à arête coupante (21) et, entre rouleau de récolte (4) et support (7), une partie remontée (28), servant de protection contre le blocage par particules hâchées, et que le bord inférieur (29) de la pièce de raccordement (20) est situé dans la zone du rouleau de récolte (4), à l'intérieur du rayon (R2) et que la pièce de raccordement (20) descend dans la zone du contre-rouleau (5) (cf. fig. 3).

10. Dispositif de récolte selon les revendications 1 à 9,
caractérisé par le fait
que la partie remontée (27) de la pièce de raccordement (20) est pourvue d'une lame interchangeable (30), entre le rouleau de récolte (4) et le contre-rouleau (5, 6).

11. Dispositif de récolte selon les revendications 1 à 10,
caractérisé par le fait
que la pièce de raccordement (20) est située au-dessous des hélices (18; 19) des deux rouleaux (4, 5) et présente, sur la totalité de sa longueur supérieure, entre les deux supports (7), un bord (21a), formé à l'opposé de l'entrée des plantes (PE) et embrassant, en segment de cercle, une partie de la circonférence des deux rouleaux (4, 5), lequel bord (21a) forme l'arête coupante (21) de la partie remontée (27), entre les rouleaux (4, 5), dans la zone du rouleau de récolte (4), avec son hélice (18), dans la zone "S" (cf. fig. 4).

12. Dispositif de récolte selon la revendication 11,
caractérisé par le fait
que la pièce de raccordement (20) présente, à l'extrémité (20b), la partie remontée (28) servant de protection contre le blocage par particules hâchées et que son bord inférieur (29) s'étend, horizontalement, à intervalle, au-dessous du rouleau de récolte (4) et du contre-rouleau (5), allant du roul-eau de récolte (4) jusqu'à l'extrémité longitudinale (20a) (cf. fig. 4).

13. Dispositif de récolte selon les revendications 1 à 12,
caractérisé par le fait
que la pièce de raccordement (20), coordonnée au rouleau de récolte (4), monté sur un support (7), et à la tôle de guidage (6), montée sur l'autre support (7), est fixée, rigidement, par son extrémité (20a) au support (7), maintenant la tôle de guidage (6), et reliée, chargée par ressort, par son extrémité (20b), au support (7) du rouleau de récolte (4) et qu'elle s'engage dans une entaille (11) du rouleau de récolte (4), et embrasse celui-ci, sur un segment de cercle, avec la pièce de protection remontée (28), jusqu'à l'arête coupante 21, qui s'étend, à peu près horizontalement, entre la tôle de guidage (6) et le rouleau de récolte (4), dans la fente (31) (cf. fig. 6).
